# EUROPÄISCHE PATENTSCHRIFT

(11) **EP 2 113 753 B1**
(45) Veröffentlichungstag und Bekanntmachung des Hinweises auf die Patenterteilung: **29.06.2011**
(21) Anmeldenummer: 09100247.7
(22) Anmeldetag: 23.04.2009
(51) Int. Cl.: G01F 23/24

(54) **Vorrichtung zum Messen einer Sondenimpedanz**
Device for measuring a probe impedance
Dispositif de mesure d'une impédance de sondes

(30) Priorität: 24.04.2008 DE 102008020647
(43) Veröffentlichungstag der Anmeldung: 04.11.2009
(73) Patentinhaber: Continental Automotive GmbH, 30165 Hannover (DE)
(72) Erfinder: Bolz, Stephan, 93102, Pfatter (DE)

(56) Entgegenhaltungen:
- CH-A5- 684 806
- DE-A1- 19 502 195
- DE-U1- 29 805 413
- GB-A- 1 001 379
- US-A- 4 638 305
- US-A1- 2006 096 368

## Beschreibung

Die Erfindung betrifft eine Vorrichtung zum Messen einer Sondenimpedanz.

Um die Füllhöhe einer Flüssigkeit in einem Tank zu bestimmen, können mechanische Vorrichtungen eingesetzt werden, beispielsweise ein Schwimmer. Bei elektrisch leitfähigen Flüssigkeiten kann die Füllhöhe auch über den Leitwert der Flüssigkeit bestimmt werden. Wird eine elektrische Spannung an einem Sondenpaar angelegt, kann aus dem Stromfluss zwischen den Sonden die Eintauchtiefe der Sonden in der Flüssigkeit bestimmt werden. Um während des Betriebs des Sensors eine elektrolytische Dissoziation der Flüssigkeit zu vermeiden, kann der Sensor mit Wechselspannung betrieben werden. Spannung und Strom an den Sonden des Sensors sind dementsprechend als Wechselsignale beobachtbar, was eine einfache und genaue Auswertung erschwert.

Derartige Sensoren sind aus DE 298 05 413 U1, DE 195 02 195 A1 und CH 684 806 A5 bekannt.

Es ist eine Aufgabe der Erfindung, eine Vorrichtung zum Messen einer Sondenimpedanz anzugeben, die eine präzise Messung ermöglicht und dabei preiswert herzustellen ist.

Diese Aufgabe wird gelöst durch eine Vorrichtung mit den Merkmalen des Anspruchs 1.

Eine Vorrichtung zum Messen einer Sondenimpedanz umfasst eine Wechselspannungsquelle, die mit einer Sonde gekoppelt ist. Die Vorrichtung umfasst weiter ein Umschaltelement, das eingangsseitig mit der Wechselspannungsquelle und der Sonde gekoppelt ist. Die Vorrichtung weist einen Kondensator auf, der mit einem Ausgang des Umschaltelements gekoppelt ist. Das Umschaltelement ist von einem Ausgangssignal der Wechselspannungsquelle so schaltbar, dass es wechselweise mit dem Kondensator und einem weiteren Ausgang gekoppelt ist.

Die Vorrichtung kann in einer weiteren Ausführungsform eine weitere Sonde umfassen, die mit der Wechselspannungsquelle gekoppelt ist. Die Vorrichtung kann ein weiteres Umschaltelement aufweisen, das eingangsseitig mit der Wechselspannungsquelle und der Sonde gekoppelt ist. Die Vorrichtung weist in diesem Ausführungsbeispiel einen weiteren Kondensator auf, der mit einem Ausgang des weiteren Umschaltelements gekoppelt ist. Das weitere Umschaltelement ist von dem Ausgangssignal der Wechselspannungsquelle so schaltbar, dass es wechselweise mit dem weiteren Kondensator und einem wiederum weiteren Ausgang gekoppelt ist. So können Messergebnisse der ersten Sonde kalibriert werden und Eigenschaften des zu messenden Stoffes festgestellt werden.

Der weitere Ausgang und der wiederum weitere Ausgang können mit einem festen Potential gekoppelt sein. Die Vorrichtung kann einen Inverter umfassen, der mit der Wechselspannungsquelle und einer der Sonden gekoppelt ist. Dadurch kann eine Beeinflussung der Sonde und der weiteren Sonde untereinander verringert werden.

Die Vorrichtung kann eine wiederum weitere Sonde aufweisen, die an ein festes Potential gekoppelt ist. Die Wechselspannungsquelle kann einen Schmitt-Trigger-Oszillator umfassen. Sie kann eingerichtet sein, eine Rechteckspannung mit konstanter Frequenz bereitzustellen. So ist eine möglichst präzise Messung möglich.

Ein Widerstand, der im Betrieb an der Sonde abfällt, kann charakteristisch sein für eine Füllhöhe einer elektrisch leitfähigen Flüssigkeit in einem Tank. Ein weiterer Widerstand, der im Betrieb an der weiteren Sonde abfällt, kann charakteristisch sein für qualitative Eigenschaften der elektrisch leitfähigen Flüssigkeit in dem Tank. So ist ein Füllstandsensor gegeben, der zusätzliche Auswertungen der Flüssigkeit ermöglicht, wie beispielsweise die Messung der Konzentration bestimmter Stoffe in der Flüssigkeit.

Weitere Merkmale, Vorteile und Weiterbildungen ergeben sich aus den nachfolgenden in Verbindung mit den Figuren 1 bis 5 erläuterten Beispielen.

Es zeigen:
- Figur 1: ein Schaltbild einer ersten Ausführungsform einer Vorrichtung,
- Figur 2: ein Schaltbild einer weiteren Ausführungsform einer Vorrichtung,
- Figur 3: eine schematische Darstellung einer Vorrichtung und eines Flüssigkeitstanks,
- Figur 4: eine schematische Darstellung einer weiteren Aus- führungsform einer Vorrichtung und eines Flüssig- keitstanks, und
- Figur 5: Signalzustände an verschiedenen Punkten einer Vor- richtung.

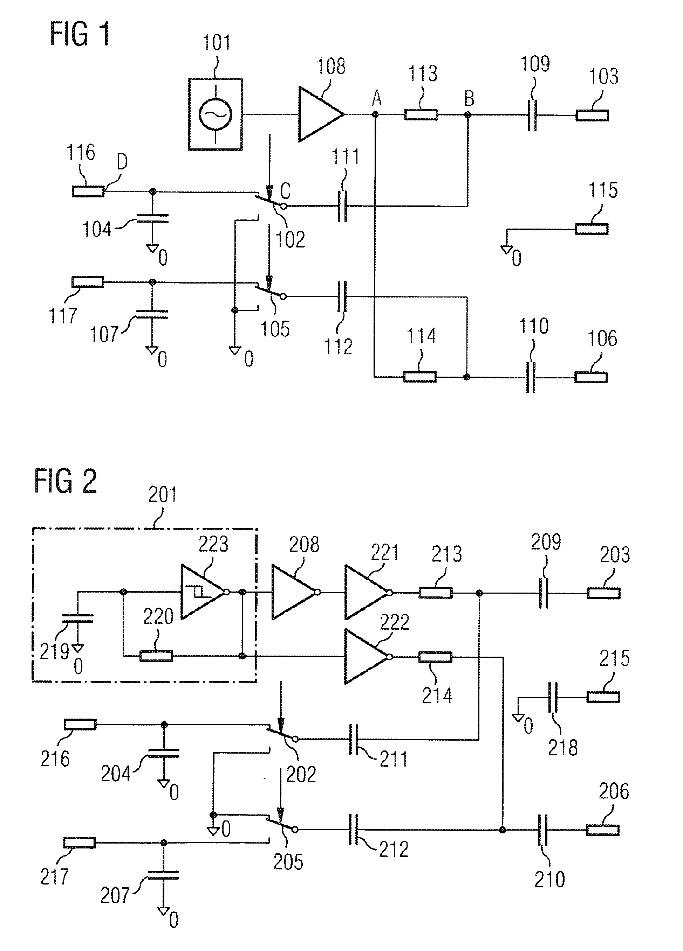

Figur 1 zeigt eine Wechselspannungsquelle 101, die beispielsweise ein Rechtecksignal mit konstanter Frequenz bereitstellt. Ein Ausgang der Wechselspannungsquelle 101 ist mit einem Buffer 108 gekoppelt. Der Ausgang des Buffers 108 ist mit einer Sonde 103 gekoppelt. Die Kopplung umfasst einen Widerstand 113 und einen Kondensator 109. Das Ausgangssignal des Buffers 108 ist zudem über einen Kondensator 111 mit einem Umschaltelement 102 gekoppelt. Das Umschaltelement 102 hat zwei Schaltpositionen. In einer ersten Schaltposition koppelt das Schaltelement 102 das Signal mit einem Kondensator 104. In der zweiten Schaltposition ist das Schaltelement 102 mit einem festen Potential, beispielsweise Masse gekoppelt. Das Umschaltelement 102 wird von dem Ausgangssignal der Wechselspannungsquelle 101 geschaltet. Das Umschaltelement wird von der Wechselspannungsquelle zwischen der ersten und der zweiten Schaltposition wechselweise geschaltet.

Der Ausgang des Buffers 108 ist an eine weitere Sonde 106 gekoppelt. Die Kopplung umfasst einen Widerstand 114 und einen Kondensator 110. Zwischen dem Widerstand 114 und dem Kondensator 110 ist über einen Kondensator 112 ein weiteres Umschaltelement 105 gekoppelt. Das Umschaltelement 105 weist zwei Schaltpositionen auf, zwischen denen es wechselweise von der Wechselspannungsquelle 101 geschaltet wird. In einer ersten Schaltposition koppelt das Umschaltelement 105 mit einem Kondensator 107, in einer zweiten Schaltposition ist der Schalter 105 mit einem festen Potential, beispielsweise Masse, gekoppelt.

Die Figur zeigt eine weitere Sonde 115, die mit einem festen Potential, beispielsweise Masse, gekoppelt ist. Am Ausgang 116, der mit dem Kondensator 104 gekoppelt ist, kann ein Messsignal, das der Sonde 103 zugeordnet ist, abgegriffen werden. Am Ausgang 117, der mit dem Kondensator 107 gekoppelt ist, kann ein Messsignal, das der Sonde 106 zugeordnet ist, abgegriffen werden.

Die Wechselspannungsquelle kann ein Oszillator sein, der beispielsweise ein Ausgangssignal mit der konstanten Frequenz von 10 kHz bereitstellt. Der Buffer 108 erzeugt an seinem Ausgang ein Signal mit einem festen Pegel. Der Pegel weist beispielsweise einen Spitzenwert von 5 V und einen Minimalwert von 0 V auf. Der Kondensator 109 und der Kondensator 110 dienen als Entkopplungskondensatoren und verhindern weitestgehend, dass der Gleichspannungsanteil des Bufferausgangssignals an die Sonde 103 beziehungsweise die Sonde 106 gelangt. Die Kapazität der Kondensatoren 109 und 110 ist jeweils so gewählt, dass die Reaktanz wesentlich kleiner ist als der Widerstand 113 beziehungsweise der Widerstand 114. So fällt an dem Kondensator 109 beziehungsweise an dem Kondensator 110 keine signifikante Wechselspannung ab. Der Schaltungsaufbau stellt eine Spannungsteilerschaltung zwischen dem Widerstand 113 und dem Widerstand, der zwischen der Sonde 103 und der Sonde 115 messbar ist, dar. Ebenfalls ist zwischen dem Widerstand 114 und dem Widerstand, der zwischen der Sonde 106 und der Sonde 115 messbar ist, eine Spannungsteilerschaltung gegeben.

Der Kondensator 111 verhindert im Wesentlichen, dass der Gleichspannungsanteil des anliegenden Signals an das Umschaltelement 102 gelangt. Der Kondensator 112 verhindert möglichst, dass der Gleichspannungsanteil des anliegenden Signals an das Umschaltelement 105 gelangt. Durch das Umschalten des Umschaltelements 102 wechselweise zwischen dem Kondensator 104 und dem festen Potential wird der Kondensator 104 auf den Spitze-Spitze-Wert des Wechselsignals aufgeladen. Eine Elektrode des Kondensators 104 ist mit einem festen Potential gekoppelt, beispielsweise Masse. Durch den Umschalter 102 und den Kondensator 104 erfolgt eine Gleichrichtung des Wechselspannungssignals. Durch das Umschalten des Umschaltelements 105 zwischen dem Kondensator 107 und dem festen Potential, das von dem Ausgangssignal der Wechselspannungsquelle 101 gesteuert wird, wird der Kondensator 107 auf den Spitze-Spitze-Wert des Signals aufgeladen. Der Kondensator 107 weist eine Elektrode auf, die mit einem festen Potential gekoppelt ist, beispielsweise Masse. An dem Kondensator 107 ist ein Gleichspannungssignal abgreifbar, das einem Messwert an der Sonde 106 entspricht.

Figur 2 zeigt eine Wechselspannungsquelle 201, die einen Kondensator 219, einen Widerstand 210 und einen Inverter 223 mit Schmitt-Trigger Verhalten umfasst. Der Eingang des Inverters 223 ist mit dem Kondensator 219 und dem Widerstand 210 gekoppelt. Der Ausgang des Inverters ist mit dem Widerstand 210 gekoppelt. Der Ausgang der Wechselspannungsquelle 201 ist mit einem Inverter 208 und einem weiteren Inverter 221 gekoppelt. Das Ausgangssignal des Inverters 221 ist mit einer Sonde 203 gekoppelt. Die Kopplung umfasst einen Widerstand 213 und einen Kondensator 209.

Das Ausgangssignal der Wechselspannungsquelle 201 ist mit einem weiteren Inverter 222 gekoppelt. Das Ausgangssignal des Inverters 222 ist mit einer Sonde 206 gekoppelt. Die Kopplung umfasst einen Widerstand 214 und einen Kondensator 210. Eine weitere Sonde 215 ist über einen Kondensator 218 mit einem festen Potential gekoppelt, beispielsweise Masse.

Der Eingang eines Umschaltelements 202 ist über einen Kondensator 211 mit der Ausgangsseite des Widerstands 213 gekoppelt. Das Umschaltelement 202 ist zudem über den Kondensator 211 mit dem Kondensator 209 und damit mit der Sonde 203 gekoppelt. Das Umschaltelement 202 wird von dem Ausgangssignal der Wechselspannungsquelle 201 gesteuert. Die Wechselspannungsquelle schaltet das Umschaltelement 202 wechselweise zwischen einem Kondensator 204 und einem festen Potential, beispielsweise Masse. An einem Ausgang 216 kann ein Messsignal, das der Sonde 203 zugeordnet ist, abgegriffen werden.

Ein Umschaltelement 205 ist eingangsseitig über einen Kondensator 212 über den Kondensator 210 mit der Sonde 206 gekoppelt und über den Widerstand 214 mit dem Inverter 222. Das Umschaltelement 205 wird von der Wechselspannungsquelle 201 gesteuert und schaltet zwischen zwei Schaltpositionen. Eine Schaltposition umfasst ein festes Potential, beispielsweise Masse, die zweite Schaltposition ist mit dem Kondensator 207 gekoppelt. An einem Ausgang 217 kann ein Messsignal abgegriffen werden, das der Sonde 206 zugeordnet ist.

Die Vorrichtung stellt einen Füllstandssensor für leitende Flüssigkeiten dar. Die Sonden 203 und 215 sind in die Flüssigkeit eingetaucht. Wird eine Spannung an die Sonden angelegt, stellt sich ein Stromfluss durch die leitende Flüssigkeit ein. Der Wert des Stromflusses hängt vom Leitwert der Flüssigkeit ab, vom Abstand der Sonden zueinander und von der Eintauchtiefe der Sonden in die Flüssigkeit. Ist der Abstand der Sonden zueinander und der Leitwert der Flüssigkeit bekannt, kann aus dem Stromfluss die Eintauchtiefe der Sonden in die Flüssigkeit errechnet werden und somit der Füllstand der Flüssigkeit in einem Tank. Umfasst der Tank ein elektrisch leitfähiges Material, kann auf die Sonde 215 verzichtet werden. Der Tank ist in diesem Ausführungsbeispiel mit einem festen Potential gekoppelt und der Abstand zwischen der Sonde 203 und dem Tank bekannt. Es kann ein Widerstand gemessen werden, der zwischen der Sonde 203 und dem Tank abfällt.

Der Leitwert kann beispielsweise aus dem Messsignal der Sonde 206 bestimmt werden beziehungsweise aus dem Stromfluss zwischen der Sonde 206 und der Sonde 215. Zudem kann aus dem Stromfluss zwischen der Sonde 206 und der Sonde 215 auf qualitative Eigenschaften der Flüssigkeit geschlossen werden. Ist die Flüssigkeit beispielsweise eine wässrige Harnstofflösung, kann auf die Harnstoffkonzentration in der wässrigen Harnstofflösung geschlossen werden. Der Abstand der Sonde 206 zu der Sonde 215 ist bekannt. Die Sonde 206 ist vollständig von der Flüssigkeit benetzt. Die Sonde 215 ist im Messbereich der Sonde 206 vollständig von der Flüssigkeit benetzt. Zwischen der Sonde 206 und der Sonde 215 fällt in der Flüssigkeit ein Widerstand ab, der ein Maß für den Leitwert der Flüssigkeit ist.

An der Sonde 203 und der Sonde 206 ist eine Wechselspannung angelegt, um eine elektrolytische Dissoziation zu vermeiden. Das Signal liegt an der Sonde 206 im Vergleich zur Sonde 203 invertiert an, damit sich die Sonden gegenseitig nicht beeinflussen. Ein Messstrom der Sonde 203 in der leitenden Flüssigkeit beeinflusst die Messung an der Sonde 206 nicht. Ein Messstrom der Sonde 206 in der leitenden Flüssigkeit beeinflusst die Messung an der Sonde 203 nicht. Es können auch mehr Inverter als beschrieben angeordnet sein, die Schaltung kann auch weniger Inverter umfassen. Die Kopplung einer Sonde mit der Wechselspannungsquelle umfasst einen Inverter mehr, als die Kopplung der anderen Sonde mit der Wechselspannungsquelle, so dass das Signal an der Sonde 203 gegenüber der Sonde 206 invertiert ist.

Um die Signale der Sonden einfach und präzise auswerten zu können, werden die Wechselsignale gleichgerichtet. Dies geschieht über die Schalter 202 und 205 mit den Kondensatoren 204 und 207. Dabei muss berücksichtigt werden, dass die Signale der jeweiligen Sonden invertiert zueinander sind. Wenn das Umschaltelement 202 mit dem Kondensator 204 gekoppelt ist, ist das Umschaltelement 205 mit dem festen Potential gekoppelt. Wenn das Umschaltelement 205 mit dem Kondensator 207 gekoppelt ist, ist das Umschaltelement 202 mit dem festen Potential gekoppelt. Der Kondensator 204 wird dadurch auf den Spitze-Spitze-Wert des Signals geladen, das der Sonde 203 zugeordnet ist. Der Kondensator 207 wird auf den Spitze-Spitze-Wert des Signals geladen, das der Sonde 206 zugeordnet ist. Die Messwerte der jeweiligen Sonden können so an den Ausgängen 216 beziehungsweise 217 als Gleichspannungssignal abgegriffen werden. Durch den Kondensator 218 wird eine elektrolytische Dissoziation der Flüssigkeit an der Mittelsonde weitestgehend verhindert. Die Dissoziation kann beispielsweise auftreten, wenn der Kondensator 218 beziehungsweise die Sonde 215 an ein anderes Potential als Masse angeschlossen ist, insbesondere wenn die Sonde 215 an ein anderes Potential als die Kondensatoren 204 und 207 gekoppelt ist.

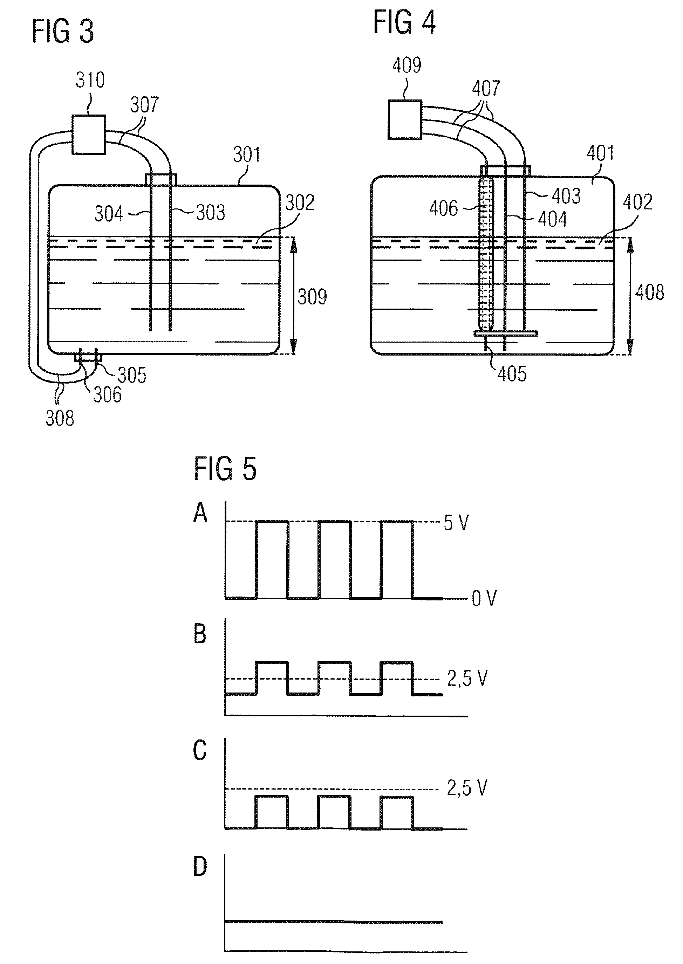

Figur 3 zeigt einen Tank 301, der mit einer Flüssigkeit 302 bis zu einer bestimmten Höhe 309 gefüllt ist. In die Flüssigkeit tauchen die Sonde 303 und die Sonde 304 ein. Weiterhin tauchen die Sonde 305 und 306 in die Flüssigkeit ein. Die Sonden 303 und 304 sind über ein Leitungselement 307 mit einer Auswerteeinheit 310 gekoppelt. Die Sonden 305 und 306 sind über ein Leitungselement 308 ebenfalls mit der Auswerteeinheit 310 gekoppelt. Die Auswerteeinheit 310 umfasst bis auf die Sonden eine Schaltung wie in Figur 1 oder Figur 2 gezeigt. Die Auswerteeinheit 310 kann weitere Schaltungen und elektronische Bauelemente umfassen. Die Auswerteeinheit 310 ist beispielsweise Teil einer Motorsteuerung eines Kraftfahrzeugs.

Die Sonden 303 und 304 dienen zur Bestimmung der Höhe 309, bis zu der die Flüssigkeit in dem Tank ist. Die Sonde 304 ist mit Masse gekoppelt und die Sonde 303 mit einer Gleichrichterschaltung, wie in Verbindung mit Figur 1 beziehungsweise Figur 2 erläutert. Der Abstand der Sonde 303 zur Sonde 304 ist festgelegt. Über die Sonden 305 und 306 kann der Leitwert der Flüssigkeit 302 bestimmt werden. Die Sonde 306 ist mit Masse gekoppelt. Der Abstand der Sonde 305 zur Sonde 306 ist festgelegt. Die Sonde 305 entspricht in einer Schaltung, wie in Verbindung mit Figur 1 und 2 erläutert, der Sonde 103 beziehungsweise 203.

Die Auswerteeinheit 310 legt eine Wechselspannung an die Sonde 303 an. Über den Widerstand, der zwischen der Sonde 303 und 304 abfällt, beziehungsweise über den Stromfluss zwischen der Sonde 303 und 304 durch die Flüssigkeit 302, kann in Verbindung mit dem Leitwert der Flüssigkeit auf die Füllstandshöhe 309 geschlossen werden. Der Leitwert wird aus dem Widerstand zwischen der Sonde 305 und der Sonde 306 beziehungsweise über den Stromfluss zwischen der Sonde 305 und 306 durch die Flüssigkeit 302 errechnet. Die freiliegenden Flächen der Sonden 305 und 306 sind innerhalb des Tanks vollständig von der Flüssigkeit benetzt.

Die Wechselspannung, die an der Sonde 303 und 304 beziehungsweise der Sonde 305 und 306 anliegt, wird von der Auswerteeinheit durch Halbleiterschalter gleichgerichtet. Die Halbleiterschalter werden von der Wechselspannungsquelle gesteuert. So können die Messwerte relativ einfach ausgewertet werden. Der Messbereich der Sonde 303 und 304 und der Messbereich der Sonden 305 und 306 sind innerhalb der Flüssigkeit räumlich voneinander getrennt. Der Abstand der Sonde 303 zur Sonde 304 ist bekannt. Der Abstand der Sonde 305 zur Sonde 306 ist bekannt.

Die Flüssigkeit 302 ist eine leitende Flüssigkeit. In einem Kraftfahrzeug kann die Flüssigkeit 302 beispielsweise ein Kühlwasser sein oder ein Wischwasser einer Scheibenwaschanlage. Die Flüssigkeit kann auch eine wässrige Harnstofflösung sein. Wässrige Harnstofflösungen werden in Kraftfahrzeugen bei der Abgasnachbehandlung zur Stickoxidreduktion verwendet. Über die Messung mit den Sonden 305 und 306 können qualitative Eigenschaften der Flüssigkeit 302 bestimmt werden. Beispielsweise kann bei einer wässrigen Harnstofflösung die Konzentration des Harnstoffs bestimmt werden.

Figur 4 zeigt einen Tank 401, in den eine Flüssigkeit 402 bis zu einer Höhe 408 gefüllt ist. Eine Sonde 403, eine Sonde 404 und eine Sonde 405 ragen in die Flüssigkeit 402. Die Sonden sind über ein Leitungselement 407 mit einer Auswerteeinheit 409 gekoppelt. Die Sonde 405 ist im Bereich der Sonde 403 mit einer Isolierung 406 elektrisch isoliert. Die Sonde 405 ist länger als die Sonde 403 und weist einen Bereich auf, der nicht elektrisch isoliert ist. Die Sonde 404 ist länger als die Sonde 403 und ragt mindestens bis zu dem Bereich, in dem die Sonde 405 nicht isoliert ist. Die Sonden 404 und 405 sind in etwa gleich lang.

Die Sonden 403, 404 und 405 sind mit einer Vorrichtung zur Gleichrichtung von Wechselspannung, wie in Verbindung mit Figur 1 und 2 erläutert, gekoppelt. Die Sonde 403 entspricht der Sonde 103 beziehungsweise 203. Die Sonde 405 entspricht der Sonde 106 beziehungsweise 206. Die Sonde 404 entspricht der Sonde 115 beziehungsweise 215 und ist mit Masse gekoppelt. Die Schaltung ist zumindest Teilweise in der Auswerteeinheit 409 angeordnet. Die Sonden 403 und 405 teilen sich eine Massensonde 404. Damit sich die Messbereiche nicht überschneiden, ist die Sonde 405 länger als die Sonde 403. Die Sonde 405 ist entsprechend in dem Bereich der Sonde 403 isoliert. Die Widerstandsmessung zwischen der Sonde 405 und 404 findet in einem Bereich statt, in dem die Sonde 405 nicht von der Isolierung 406 bedeckt ist. Die Widerstandsmessung zwischen der Sonde 403 und 404 findet in einem Bereich statt, in dem die Sonde 405 von der Isolierung 406 bedeckt ist. Der Abstand der Sonden zueinander ist fest und beispielsweise in der Auswerteeinheit gespeichert.

Figur 5 zeigt die Signalzustände an Punkten A, B, C und D der in Figur 1 gezeigten Schaltung. Das Ausgangssignal des Buffers ist ein Rechtecksignal mit konstanter Frequenz. Das Signal wechselt zwischen dem Pegel 0 V und 5 V. Es weist eine Frequenz von beispielsweise 10 kHz auf. Am Punkt B weist das Wechselspannungssignal einen Gleichspannungsanteil von etwa 2,5 V auf. Der Wechselspannungsanteil beziehungsweise der Spitze-Spitze-Wert liegt zwischen 0 und 5 V. Am Punkt C ist der Gleichspannungsanteil aus dem Signal abgezogen. Das Signal weist einen Pegel von 0 und knapp unter 2,5 V auf. Das Umschaltelement 102 wird phasensynchron zum Wechselspannungssignal an dem Kondensator 111 so geschaltet, dass der Kondensator 111 mit dem Kondensator 104 gekoppelt ist, wenn das Wechselspannungssignal einen hohen Spannungswert hat. Der Kondensator 111 ist dann mit Masse gekoppelt, wenn das Wechselspannungssignal einen niedrigen Spannungswert hat. So wird der Kondensator 104 auf den Spitze-Spitze-Wert des Wechselspannungssignals geladen. Dies entspricht einer Synchrongleichrichtung des Wechselspannungssignals.

Der Kondensator 112 wird über das Umschaltelement 105 mit dem Kondensator 107 gekoppelt, wenn das Wechselspannungssignal einen hohen Spannungswert hat. Der Kondensator 112 wird von dem Umschaltelement 105 mit Masse gekoppelt, wenn das Wechselspannungssignal einen niedrigen Spannungswert hat. Dadurch wird der Kondensator 107 auf den Spitze-Spitze-Wert des Wechselspannungssignals aufgeladen.

Am Punkt D kann so eine Gleichspannung abgegriffen werden, die ein Maß für den Wechselspannungswiderstand zwischen der Sonde 103 und der Sonde 115 darstellt. Entsprechend kann ein Gleichspannungssignal abgegriffen werden, das ein Maß für den Wechselspannungswiderstand zwischen der Sonde 106 und der Sonde 115 darstellt.

## Patentansprüche

1. Vorrichtung zum Messen einer Sondenimpedanz, umfassend:
- eine Wechselspannungsquelle (101; 201), die mit einer Sonde (103; 203) gekoppelt ist; und
- eine Bezugssonde (115; 215), die mit einem festen Potential gekoppelt ist, insbesondere mit Masse; **gekennzeichnet durch** Kopplung der Wechselspannungsquelle (101; 201) mit der Sonde über eine Serienschaltung eines Widerstands (113; 213) und eines ersten Kondensators (109, 209);
- ein Umschaltelement (102; 202), das eingangsseitig über einen zweiten Kondensator (111; 211) und den Mittelabgriff der Serienschaltung (113, 109; 213, 209) mit der Wechselspannungsquelle (101; 201) und der Sonde (103; 203) gekoppelt ist; und
- einen dritten Kondensator (104; 204), der mit einem Ausgang des Umschaltelements (102; 102) gekoppelt ist, wobei das Umschaltelement von einem Ausgangssignal der Wechselspannungsquelle (101; 201) so schaltbar ist, dass es wechselweise mit dem dritten Kondensator (104; 204) und einem Masseanschluss (0) gekoppelt ist, so dass der dritte Kondensator (104; 204) auf den Spitze-Spitze-Wert des am Mittelabgriff der Serienschaltung (113, 109; 213, 209) anliegenden Wechselspannungssignals aufgeladen wird.

2. Vorrichtung nach Anspruch 1, umfassend:
- eine weitere Sonde (106; 206), die die über eine Serienschaltung eines Widerstands (114; 214) und eines vierten Kondensators (110, 210) mit der Wechselspannungsquelle (101; 201) gekoppelt ist;
- ein weiteres Umschaltelement (105; 205), das eingangsseitig über einen fünften Kondensator (112; 212) und den Mittelabgriff der Serienschaltung (114, 110; 214, 210) mit der Wechselspannungsquelle (101; 201) und der Sonde (106; 206) gekoppelt ist;
- einen weiteren Kondensator (107; 207), der mit einem Ausgang des weiteren Umschaltelements (105; 205) gekoppelt ist, wobei das weitere Umschaltelement (105; 205) von dem Ausgangssignal der Wechselspannungsquelle (101; 101) so schaltbar ist, dass es wechselweise mit dem weiteren Kondensator (107; 207) und dem Masseanschluss (0) gekoppelt ist, so dass der weitere Kondensator (107; 207) auf den Spitze-Spitze-Wert des am Mittelabgriff der Serienschaltung (114, 110; 214, 210) anliegenden Wechselsignals aufgeladen wird.

3. Vorrichtung nach Anspruch 1 oder 2, umfassend einen Inverter (208), der mit der Wechselspannungsquelle (201) und einer der Sonden (203; 206) gekoppelt ist.

4. Vorrichtung nach einem der Ansprüche 1 bis 3, bei dem die Wechselspannungsquelle (101; 201) eingerichtet ist, eine Rechteckspannung mit konstanter Frequenz bereitzustellen.

5. Vorrichtung nach einem der Ansprüche 1 bis 45, bei der die Wechselspannungsquelle (101; 201) einen Schmitt-Trigger-Oszillator umfasst.

6. Vorrichtung nach einem der Ansprüche 1 bis 5, bei der ein Widerstand, der in Betrieb an der Sonde (103; 203; 303) abfällt, charakteristisch ist für eine Füllhöhe (309) einer elektrisch leitenden Flüssigkeit (302) in einem Tank (301).

7. Vorrichtung nach Anspruch 6, bei der ein weiterer Widerstand, der in Betrieb an der weiteren Sonde (106; 206; 306) abfällt, charakteristisch ist für qualitative Eigenschaften (309) der elektrisch leitenden Flüssigkeit (302) in dem Tank (301).

## Claims

1. Apparatus for measuring a probe impedance, comprising:
- an AC voltage source (101; 201) which is coupled to a probe (103; 203); and
- a reference probe (115; 215) which is coupled to a fixed potential, particularly to earth;
**characterized by** the AC voltage source (101; 201) being coupled to the probe via a series circuit comprising a resistor (113; 213) and a first capacitor (109, 209);
- a changeover element (102, 202), the input side of which is coupled to the AC voltage source (101; 201) and to the probe (103; 203) via a second capacitor (111; 211) and a centre tap of the series circuit (113, 109; 213, 209); and
- a third capacitor (104; 204) which is coupled to an output of the changeover element (102; 102), wherein the changeover element can be switched by an output signal from the AC voltage source (101; 201) such that it is alternately coupled to the third capacitor (104; 204) and to an earth connection (0), so that the third capacitor (104; 204) is charged to the peak-to-peak value of the AC voltage signal applied to the centre tap of the series circuit (113, 109; 213, 209).

2. Apparatus according to Claim 1, comprising:
- a further probe (106; 206) which is coupled to the AC voltage source (101; 201) via a series circuit comprising a resistor (114; 214) and a fourth capacitor (110, 210);
- a further changeover element (105; 205), the input side of which is coupled to the AC voltage source (101; 201) and to the probe (106; 206) via a fifth capacitor (112; 212) and the centre tap of the series circuit (114, 110; 214, 210);
- a further capacitor (107; 207) which is coupled to an output of the further changeover element (105; 205), wherein the further changeover element (105; 205) can be switched by the output signal from the AC voltage source (101; 201) such that it is alternately coupled to the further capacitor (107; 207) and to the earth connection (0), so that the further capacitor (107; 207) is charged to the peak-to-peak value of the AC voltage signal applied to the centre tap of the series circuit (114, 110; 214, 210).

3. Apparatus according to Claim 1 or 2, comprising an invertor (208) which is coupled to the AC voltage source (201) and to one of the probes (203; 206).

4. Apparatus according to one of Claims 1 to 3, in which the AC voltage source (101; 201) is set up to provide a square-wave voltage at constant frequency.

5. Apparatus according to one of Claims 1 to 4, in which the AC voltage source (101; 201) comprises a Schmitt trigger oscillator.

6. Apparatus according to one of Claims 1 to 5, in which a resistance which drops across the probe (103; 203; 303) during operation is characteristic of a filling level (309) for an electrically conductive liquid (302) in a tank (301).

7. Apparatus according to Claim 6, in which a further resistance which drops across the further probe (106; 206; 306) during operation is characteristic of qualitative properties (309) of the electrically conductive liquid (302) in the tank (301).

## Revendications

1. Dispositif de mesure d'une impédance de sonde, comprenant :
- une source de tension alternative (101 ; 201) qui est reliée à une sonde (103 ; 203) ; et
- une sonde de référence (115 ; 215) qui est reliée à un potentiel fixe, en particulier à une masse ;
**caractérisé par** une connexion de la source de tension alternative (101 ; 201) à la sonde par un montage en série d'une résistance (113 ; 213) et d'un premier condensateur (109, 209)
- un élément de commutation (102 ; 202) qui, côté entrée, est relié à la source de tension alternative (101 ; 201) et à la sonde (103 ; 203) par le biais d'un deuxième condensateur (111 ; 211) et de la prise médiane du montage en série (113, 109; 213, 209 ; et
- un troisième condensateur (104 ; 204), qui est relié à une sortie de l'élément de commutation (102 ; 202), dans lequel l'élément de commutation est commutable à partir d'un signal de sortie de la source de tension alternative (101 ; 201) de sorte qu'il est connecté, en alternance, au troisième condensateur (104 ; 204) et à une connexion de masse (0), de sorte que le troisième condensateur (104 ; 204) se charge en fonction de la valeur de crête à crête du signal de tension alternative qui est appliqué à la prise médiane du montage en série (113, 109; 213, 209).

2. Dispositif selon la revendication 1, comprenant :
- une autre sonde (106 ; 206), qui est reliée à la source de tension alternative (101 ; 201) par le biais d'un montage en série d'une résistance (114 ; 214) et d'un quatrième condensateur (110, 210) ;
- un autre élément de commutation (105 ; 205) qui, côté entrée, est relié à la source de tension alternative (101 ; 201) et à la sonde (106 ; 206) par le biais d'un cinquième condensateur (112 ; 212) et de la prise médiane du montage en série (114, 110; 214, 210);
- un autre condensateur (107 ; 207), qui est relié à une sortie de l'autre élément de commutation (105 ; 205), dans lequel l'autre élément de commutation (105 ; 205) est commutable à partir d'un signal de sortie de la source de tension alternative (101 ; 101), de sorte qu'il est connecté, en alternance, à l'autre condensateur (107 ; 207) et à la connexion de masse (0), de sorte que l'autre condensateur (107 ; 207) se charge en fonction de la valeur de crête à crête du signal de tension alternative qui est appliqué à la prise médiane du montage en série (114 110; 214, 210).

3. Dispositif selon la revendication 1 ou 2, comprenant un inverseur (208) qui est relié à la source de tension alternative (201) et à l'une des sondes (203 ; 206).

4. Dispositif selon l'une quelconque des revendications 1 à 3, dans lequel la source de tension alternative (101 ; 201) est réglée de manière à fournir une tension carrée à fréquence constante.

5. Dispositif selon l'une quelconque des revendications 1 à 4, dans lequel la source de tension alternative (101 ; 201) comprend un oscillateur à trigger de Schmitt.

6. Dispositif selon l'une quelconque des revendications 1 à 5, dans lequel une résistance, qui chute en fonctionnement sur la sonde (103 ; 203 ; 303), est caractéristique d'un niveau de remplissage (309) d'un liquide électro-conducteur (302) dans un réservoir (301).

7. Dispositif selon la revendication 6, dans lequel une autre résistance, qui chute en fonctionnement sur l'autre sonde (106 ; 206 ; 306), est caractéristique de propriétés qualitatives (309) du liquide électro-conducteur (302) dans le réservoir (301).
